# EUROPÄISCHE PATENTSCHRIFT

(11) **EP 1 996 822 B1**
(45) Veröffentlichungstag und Bekanntmachung des Hinweises auf die Patenterteilung: **27.05.2009**
(21) Anmeldenummer: 07723093.6
(22) Anmeldetag: 08.03.2007
(51) Int. Cl.: F16B 5/10, F16B 21/02

(54) **BEFESTIGUNGSANORDNUNG**
FIXING DEVICE
DISPOSITIF DE FIXATION

(30) Priorität: 13.03.2006 DE 202006004077 U; 14.09.2006 DE 102006043060
(43) Veröffentlichungstag der Anmeldung: 03.12.2008
(73) Patentinhaber: A. RAYMOND ET CIE, 38000 Grenoble (FR)
(72) Erfinder: HAUSER, Ingo, 79400 Kandern (DE)
(74) Vertreter: Rüttgers, Joachim
(86) Internationale Anmeldenummer: PCT/EP2007/001991
(87) Internationale Veröffentlichungsnummer: WO 2007/104463

(56) Entgegenhaltungen:
- DE-U1- 9 311 243
- US-A- 4 762 437

## Beschreibung

Die Erfindung betrifft eine Befestigungsanordnung gemäß dem Oberbegriff des Patentanspruches 1.

Eine derartige Befestigungsanordnung ist aus DE 93 11 243 U1 bekannt. Die vorbekannte Befestigungsanordnung zum Verbinden von zwei Bauteilen verfügt über ein drehbares Verschlussteil, das eine an einem ersten Bauteil zur Anlage kommende Kopfplatte und einen an die Kopfplatte angesetzten sowie sich von der Kopfplatte in axiale Richtung weg erstreckenden Fußschaft aufweist. An dem Fußschaft sind sich radial nach außen erstreckende, zum Hintergreifen eines zweiten Bauteiles ausgebildete Rastnasen angeformt. Weiterhin Verfügt die vorbekannte Befestigungsanordnung über eine an dem ersten Bauteil ausgebildete Aufnahme für das Verschlussteil. Die vorbekannte Befestigungsanordnung weist weiterhin ein Federelement in Gestalt einer Schraubenfeder auf, die den Fußschaft umgibt und zwischen der Kopfplatte und einer Bodenwand der Aufnahme angeordnet ist. In einer Vormontagestellung hintergreifen die Rastnasen die dem Federelement gegenüberliegende Rückseite der Aufnahme, während in einer Endmontagestellung zum Verbinden des mit der Aufnahme ausgebildeten ersten Bauteiles mit einem zweiten Bauteil unter weiterem Zusammendrücken des Federelementes das Verschlussteil um 90 Grad gedreht wird, so dass die Rastnasen nunmehr das zweite Bauteil hintergreifen.

Der Erfindung liegt die Aufgabe zugrunde, eine Befestigungsanordnung der eingangs genannten Art anzugeben, bei der die Bauteile durch Aufstecken miteinander verbindbar und in sehr einfacher Art und Weise wieder voneinander lösbar sind.

Diese Aufgabe wird bei einer Befestigungsanordnung der eingangs genannten Art erfindungsgemäß mit den kennzeichnenden Merkmalen des Patentanspruches 1 gelöst.

Dadurch, dass bei der erfindungsgemäßen Befestigungsanordnung die Rastnasen an radial federnden Federstegen angebracht sind, die durch das Zusammenwirken der Stegflügel und der Randwand zwischen einer Montagestellung und einer Demontagestellung bewegbar sind, wobei diese beiden Stellungen durch das Eingreifen der Laufzapfen in Vertiefungen eindeutig definiert sind, lassen sich die Bauteile zum Verbinden mit vorstehenden und nach Fertigstellen der Verbindung das zweite Bauteil hintergreifenden Rastnasen aufeinanderstecken, während zum Lösen der Bauteile das Verschlussteil in die Demontagestellung gedreht wird, in der die Rastnasen eingriffsfrei mit dem zweiten Bauteil sind, so dass nunmehr die Bauteile wieder voneinander lösbar sind.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: zeigt in einer perspektivischen Ansicht ein Ausführungsbeispiel einer erfindungsgemäßen Befestigungsanordnung zum Verbinden von insgesamt drei Bauteilen,
- Fig. 2: in einer Seitenansicht ein Verschlussteil der Befestigungsanordnung gemäß Fig. 1,
- Fig. 3: in einem Längsschnitt das Verschlussteil gemäß Fig. 1 und Fig. 2,
- Fig. 4: eine Draufsicht auf eine Aufnahme der Befestigungsanordnung gemäß Fig. 1 mit Blick in Einführrichtung des Verschlussteiles,
- Fig. 5: eine perspektivische Ansicht auf die Aufnahme der Befestigungsanordnung gemäß Fig. 1 bis Fig. 4 mit Blick auf die in Einsteckrichtung des Verschlussteiles abgewandte Seite der Aufnahme,
- Fig. 6: in einer perspektivischen Ansicht ein weiteres Ausführungsbeispiel einer Aufnahme einer erfindungsgemäßen Befestigungsanordnung und
- Fig. 7: im Schnitt das Ausführungsbeispiel einer erfindungsgemäßen Befestigungsanordnung gemäß Fig. 6 mit einem in die Aufnahme eingefügten Verschlussteil.

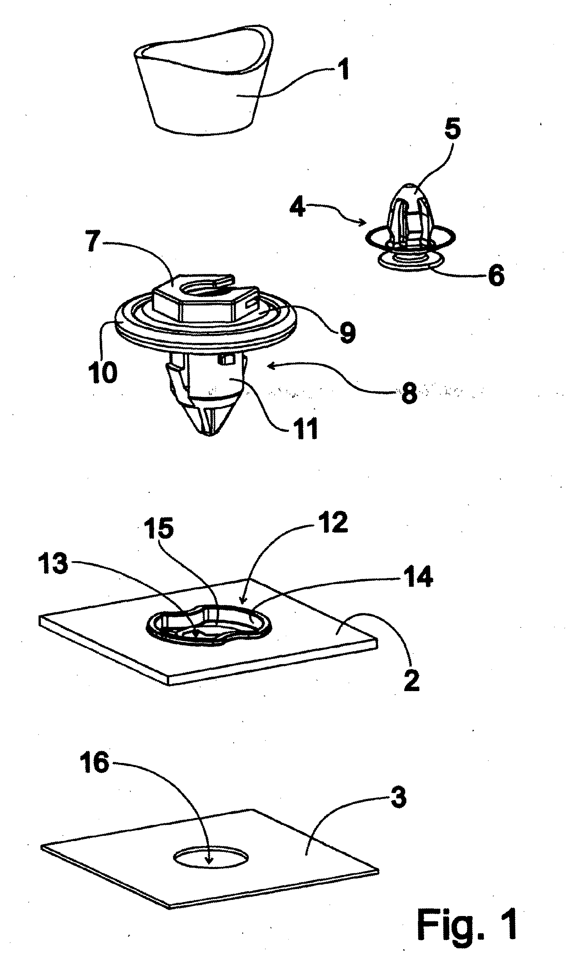

Fig. 1 zeigt in einer perspektivischen Ansicht ein Ausführungsbeispiel einer erfindungsgemäßen Befestigungsanordnung zum Verbinden von wenigstens zwei Bauteilen, wobei bei dem dargestellten Ausführungsbeispiel als Bauteile ein Verkleidungsteil 1, beispielsweise eine Türverkleidung bei einem Kraftfahrzeug, ein Anbauteil 2 und ein beispielsweise als Türblech ausgebildeten Trägerteil 3 zu verbinden sind. Die beispielhafte erfindungsgemäße Befestigungsanordnung gemäß Fig. 1 verfügt über ein an sich bekanntes Verkleidungshalteteil 4, das über einen Befestigungsfuß 5 mit dem Verkleidungsteil 1 verbindbar ist. Weiterhin weist das Verkleidungshalteteil 4 einen dem Befestigungsfuß 5 gegenüberliegenden Befestigungskopf 6 auf, der mit einem Aufnahmekopf 7 eines Verschlussteiles 8 der erfindungsgemäßen Befestigungsanordnung aus einem hartelastischen Kunststoffmaterial verbindbar ist. Bei dem dargestellten Ausführungsbeispiel ist der Aufnahmekopf 7 sechseckig ausgebildet, so dass er beispielsweise mit einem Sechskantschlüssel formschlüssig in Eingriff bringbar ist.

Das Verschlussteil 8 weist weiterhin eine tellerartige Kopfplatte 9 auf, die randseitig von einer Dichtlippe 10 aus einem weichelastischen Material umgeben ist. Auf der dem Aufnahmekopf 7 gegenüberliegenden Seite der Kopfplatte 9 verfügt das Verschlussteil 8 über einen Fußschaft 11, der sich in axialer Richtung von der Kopfplatte 9 weg erstreckt.

Weiterhin lässt sich Fig. 1 entnehmen, dass das Anbauteil 2 mit einer Aufnahme 12 der erfindungsgemäßen Befestigungsanordnung ausgebildet ist, in der zum Einen eine Anbauteilausnehmung 13 vorhanden ist, durch die der Fußschaft 11 bis zur Anlage der Kopfplatte 9 an der dem Verschlussteil 8 zugewandten Seite des Anbauteiles 2 durchführbar ist. Weiterhin weist die Aufnahme 12 eine umlaufende Randwand 14 auf, die in einem Abstand von dem Rand der Anbauteilausnehmung 13 angeordnet ist. Zwischen der Randwand 14 und dem Rand der Anbauteilausnehmung 13 ist in der Aufnahme 12 eine im Wesentlichen parallel zu dem Anbauteil 2 ausgerichtete Lauffläche 15 ausgebildet.

Schließlich lässt sich Fig. 1 entnehmen, dass in dem Trägerteil 3 eine im Wesentlichen kreisförmige Trägerteilausnehmung 16 ausgebildet ist, die so dimensioniert ist, dass die zum weiter unten näher erläuterten Verbinden der Bauteile 1, 2, 3 der Fußschaft 11 ebenfalls durch die Trägerteilausnehmung 16 durchführbar ist.

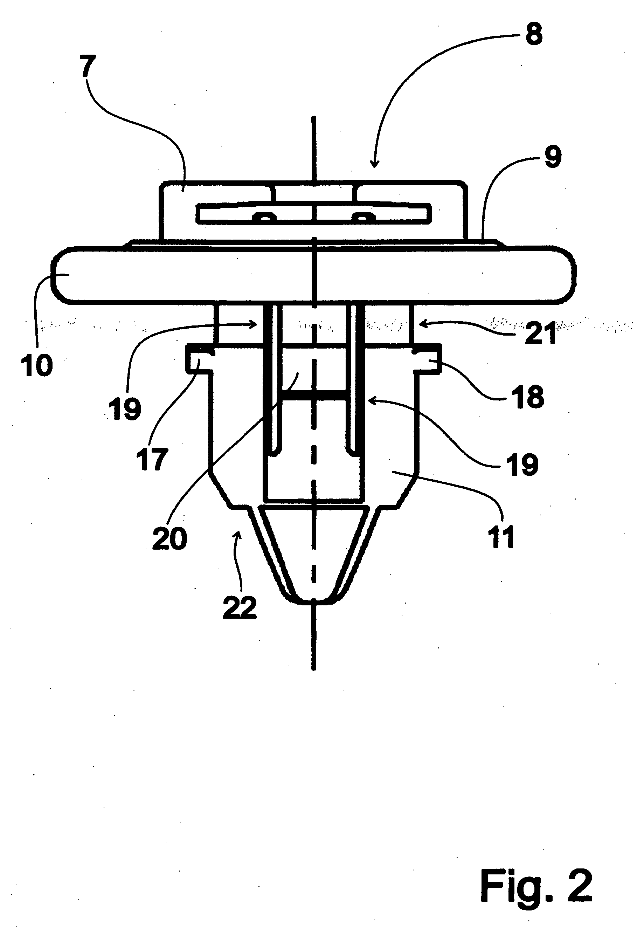

Fig. 2 zeigt in einer Seitenansicht das Verschlussteil 8 der beispielhaften Befestigungsanordnung gemäß Fig. 1. Aus Fig. 2 ist ersichtlich, dass an dem Fußschaft 11 an diametral einander gegenüberliegenden Seiten radial nach außen vorstehende Laufzapfen 17, 18 ausgebildet sind. Weiterhin lässt sich Fig. 2 entnehmen, dass zwischen den Laufzapfen 17, 18 in dem innen hohlen Fußschaft 11 durch Ausbilden von in axialer Richtung verlaufenden, voneinander beabstandeten Längsschlitzen 19 sowie in Fig. 2 nicht sichtbaren Querschlitzen im Bereich der Kopfplatte 9 Federstege 20, 21 ausgebildet sind, die im Bereich eines der Kopfplatte 9 abgewandten Fußendes 22 des Fußschaftes 11 mit dem Fußschaft 11 verbunden sind. Die Federstege 20, 21 sind daher in radialer Richtung gegenüber dem Fußschaft 11 federnd beweglich.

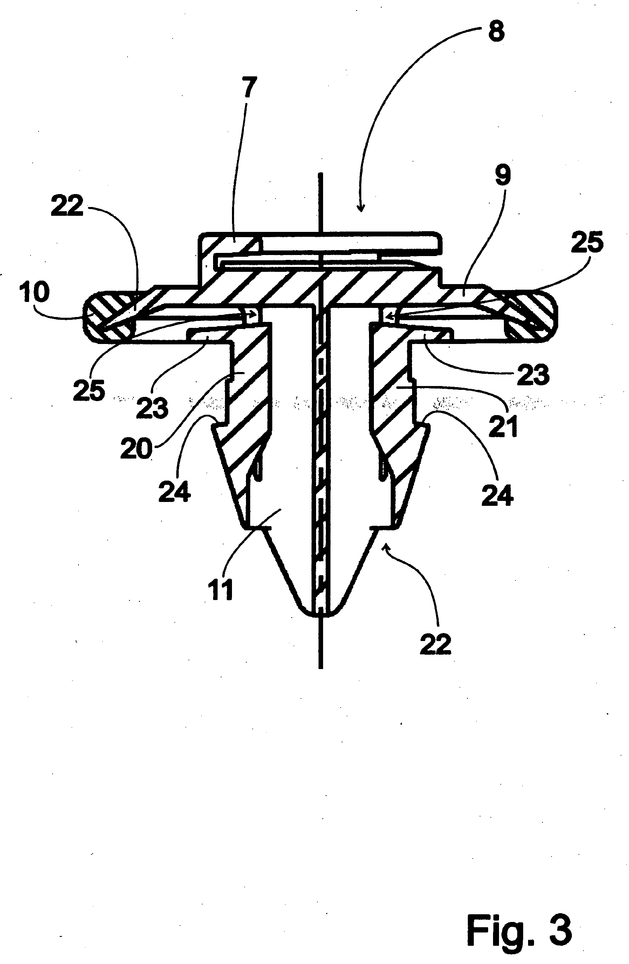

Fig. 3 zeigt in einem Längsschnitt das Verschlussteil 8 der beispielhaften Befestigungsanordnung gemäß Fig. 1 und Fig. 2. Aus Fig. 3 ist zum einen ersichtlich, dass an der Kopfplatte 9 radial außenseitig ein in Richtung des Fußschaftes 11 abgewinkelter und sich nach radial außen verjüngender Randschirm 22 ausgebildet ist, der mit der Dichtlippe 10 in Eingriff ist. Dadurch ist die Dichtlippe 10 innerhalb gewisser Grenzen durch Verbiegen des Randschirmes 22 in axialer Richtung beweglich.

Weiterhin lässt sich Fig. 3 entnehmen, dass jeder Federsteg 20, 21 an seinem der Kopfplatte 9 zugewandten Ende über einen sich radial nach außen erstreckenden Stegflügel 23 verfügt, der über die Außenseite des Fußschaftes 11 übersteht. Jeder Federsteg 20, 21 weist zudem eine ebenfalls in radialer Richtung über den Fußschaft 11 überstehende Rastnase 24 auf, die mit einer der Kopfplatte 9 zugewandten Flachseite ausgebildet ist, die bei bestimmungsgemäßer Anordnung des Verschlussteiles 8 die dem Anbauteil 2 gegenüberliegende Rückseite des Trägerteiles 3 hintergreift.

Schließlich lassen sich in Fig. 3 die in Zusammenhang mit Fig. 2 bereits erwähnten Querschlitze 25 erkennen, die zwischen der Kopfplatte 9 und den Stegflügeln 23 liegen.

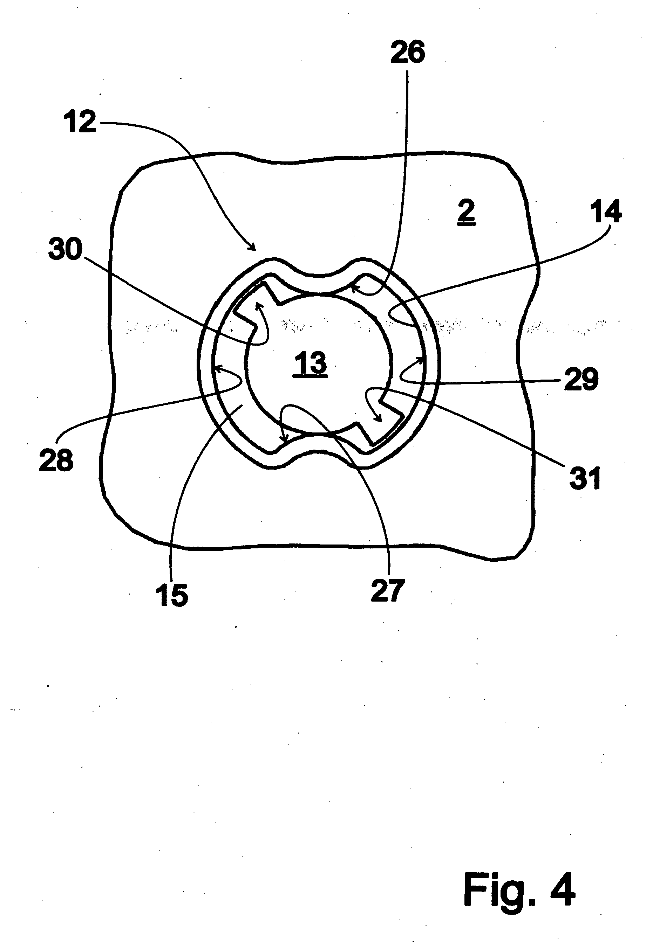

Fig. 4 zeigt in einer Draufsicht das Anbauteil 2 auf die Aufnahme 12 mit Blick in Einsteckrichtung des Verschlussteiles 8. Fig. 4 lässt sich entnehmen, dass die Randwand 14 radial nach innen vorgewölbte Einbuchtabschnitte 26, 27 aufweist, die diametral einander gegenüberliegen, während sich zwischen den Einbuchtabschnitten 26, 27 gegenüber den einander nächstkommenden Bereichen der Einbuchtabschnitte 26, 27 Ausbuchtabschnitte 28, 29 erstrecken. Schließlich ist in Fig. 4 dargestellt, dass in die Lauffläche 15 einander diametral gegenüberliegende Zapfendurchbrüche 30, 31 ausgebildet sind, die so dimensioniert sind, dass die Laufzapfen 17, 18 bei Einfügen des Verschlussteiles 8 durch die Anbauteilausnehmung 13 behinderungsfrei durchtreten können, während die Rastnasen 24 unter Einfedern der Federstege 20, 21 an dem Rand der Lauffläche 15 entlanggleiten.

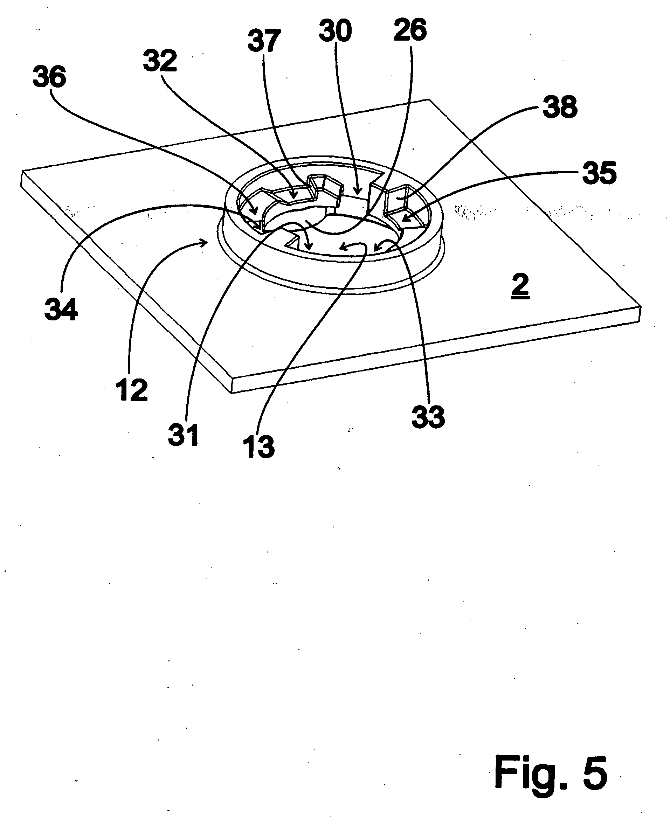

Fig. 5 zeigt in einer perspektivischen Ansicht die Aufnahme 12 der erfindungsgemäßen Befestigungsanordnung mit Blick auf die in Einsteckrichtung des Verschlussteiles 8 hintere Seite des Anbauteiles 2. Fig. 5 lässt sich entnehmen, dass auf der der Lauffläche 15 abgewandten Seite der Aufnahme 12 eine Kurvenbahn mit den Zapfendurchbrüchen 30, 31 benachbarten Montagevertiefungen 32, 33 als in einer Drehrichtung ersten Vertiefungen und in dieser Drehrichtung von den Montagevertiefungen 32, 33 beispielsweise um 90 Grad beabstandete Demontagevertiefungen 35, 36 als zweite Vertiefungen einer Profilfläche 36 ausgebildet sind. Die Montagevertiefungen 32, 33 und die Demontagevertiefungen 34, 35 sind an ihren voneinander abgewandten Randseiten mit rechwinklig zu der Drehrichtung ausgerichteten Anschlagwänden 37, 38 ausgebildet. Dadurch ist nach einem einmaligen Eindrehen des Verschlussteiles 8 in die Aufnahme 12 das Verschlussteil 8 verliersicher gehalten.

Vorzugsweise fluchten die Einbuchtabschnitte 26, 27 in axialer Richtung mit den Demontagevertiefungen 34, 35, während die Ausbuchtabschnitte 28, 29 in axialer Richtung mit den Montagevertiefungen 32, 33 fluchten. Dadurch ist eine effektive Montage gewährleistet.

Nachfolgend wird die Handhabung der erfindungsgemäßen Befestigungsanordnung gemäß Fig. 1 erläutert.

Nachdem der Befestigungsfuß 5 des Verkleidungshalteteiles 4 mit dem Verkleidungsteil 1 in Eingriff gebracht worden ist, wird der Befestigungskopf 6 in den Aufnahmekopf 7 des Verschlussteiles 8 eingefügt. Anschließend wird das Verschlussteil 8 mit dem in Zusammenhang mit Fig. 4 bereits erläuterten Einfedern der Federstege 20, 21 derart durch die Anbauteilausnehmung 13 durchgeführt, dass die Laufzapfen 17, 18 durch die Zapfendurchbrüche 30, 31 durchtreten. Anschließend wird das Verschlussteil 8 beispielsweise mittels eines mit dem Aufnahmekopf 7 in Eingriff befindlichen Gabelschlüssels so gedreht, dass die Laufzapfen 17, 18 in den Montagevertiefungen 32, 33 angeordnet und die Stegflügel 23 in den Einbuchtabschnitten 26, 27 positioniert sind. In dieser Montageanordnung wird nunmehr das Verschlussteil 8 mit dem Anbauteil 2 durch die Trägerteilausnehmung 16 geschoben, bis die Rastnasen 24 in dieser Hintergriffanordnung nach Ausfedern der Federstege 20, 21 die dem Anbauteil 2 abgewandte Seite des Trägerteiles 3 hintergreifen und die Bauteile 1, 2, 3 nunmehr miteinander verbunden sind.

Zum Demontieren, das heißt zum Lösen des Trägerteiles 3 von dem Anbauteil 2, wird nach Entfernen des Verkleidungshalteteiles 4 das Verschlussteil 8 so verdreht, dass die Laufzapfen 17, 18 nunmehr in den Demontagevertiefungen 32 zu liegen kommen. In dieser Demontageanordnung sind durch das Einwirken der Einbuchtabschnitte 26, 27 auf die Stegflügel 23 unter Einbiegen der Federstege 20, 21 die Rastnasen 24 nunmehr so weit nach radial innen versetzt, dass in dieser Freigabeanordnung ihr Hintergriff mit dem Trägerteil 3 gelöst und diese somit eingriffsfrei die Trägerteilausnehmung 16 entgegen der Einsteckrichtung passieren können.

Zum erneuten Montieren ist das Verschlussteil 8 unter Zurückdrehen wieder in die Montagestellung zu überführen, in der die Laufzapfen 17, 18 in den Montagevertiefungen 32, 33 liegen und die Rastnasen 24 ausgefedert sind.

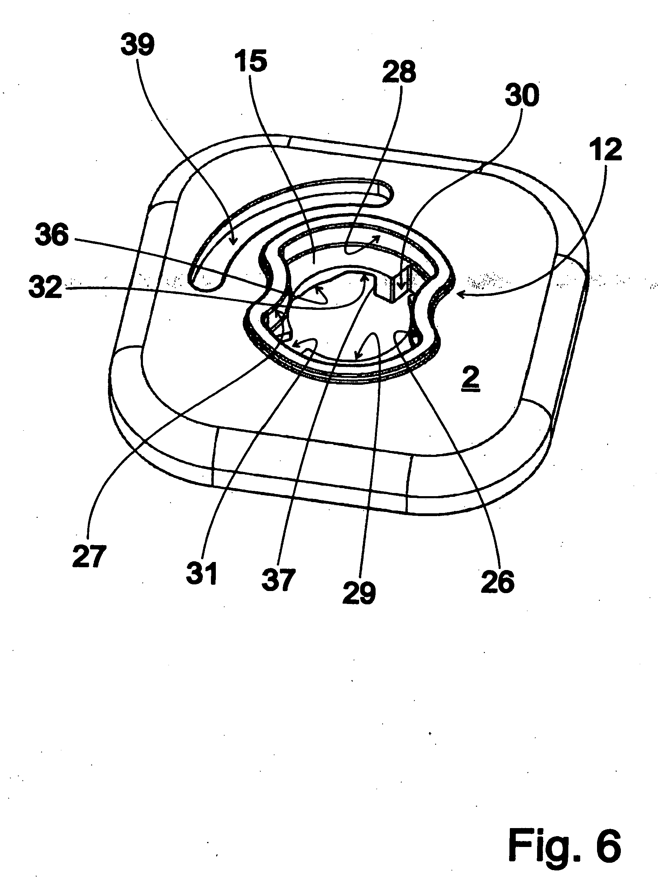

Fig. 6 zeigt in einer perspektivischen Ansicht ein weiteres Ausführungsbeispiel einer Aufnahme 12 einer erfindungsgemäßen Befestigungsanordnung, wobei sich bei dem Ausführungsbeispiel gemäß Fig. 1 bis Fig. 5 und dem Ausführungsbeispiel gemäß Fig. 6 entsprechende Elemente mit den gleichen Bezugszeichen versehen und im weiteren nicht näher erläutert sind. Aus Fig. 6 ist ersichtlich, dass die Befestigungsanordnung bei diesem Ausführungsbeispiel über eine sich über im wesentlichen 90 Grad erstreckende, kreisförmige Bogenausnehmung 39 verfügt, deren Mittelpunkt in der Mitte der Aufnahme 12 und damit in der Mitte der Anbauteilausnehmung 13 liegt.

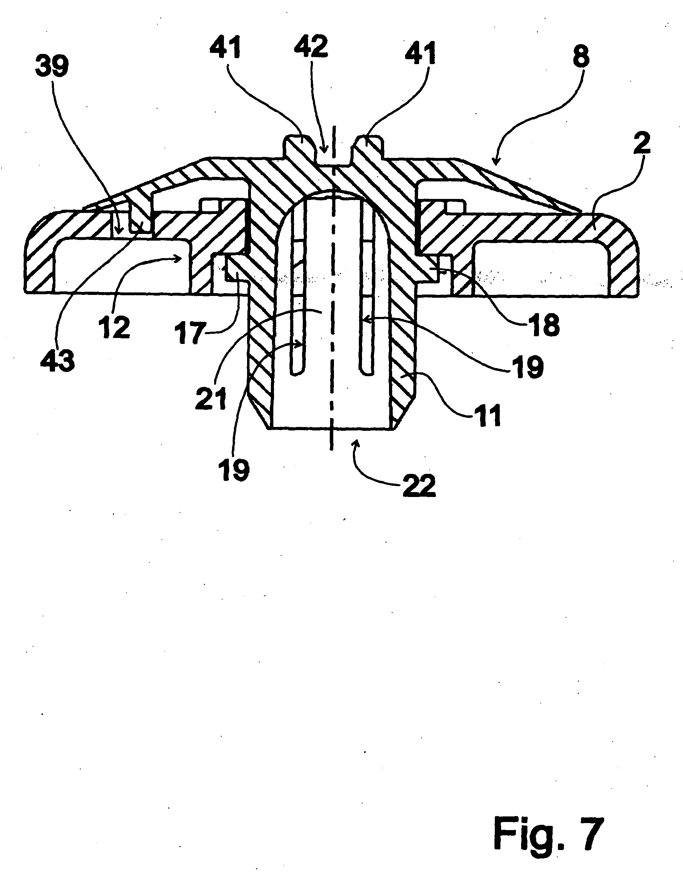

Fig. 7 zeigt im Schnitt das Ausführungsbeispiel einer erfindungsgemäßen Befestigungsanordnung gemäß Fig. 6 mit einem in die Aufnahme 12 eingefügten Verschlussteil 8, wobei sich bei dem Ausführungsbeispiel gemäß Fig. 1 bis Fig. 5 und dem Ausführungsbeispiel gemäß Fig. 6 sowie Fig. 7 entsprechende Elemente mit den gleichen Bezugszeichen versehen und im weiteren nicht näher erläutert sind. Fig. 7 lässt sich entnehmen, dass das Verschlussteil 8 mit einem in Richtung des Fußschaftes 11 geöffneten Abdeckschirm 40 ausgebildet ist, an dem im Mittenbereich zwei parallel zueinander verlaufende, von dem Fußschaft 11 wegweisend ausgerichtete Längsrippen 41 ausgebildet sind, die eine zum Eingriff mit einer Klinge eines in Fig. 7 nicht dargestellten Schraubendrehers eingerichtete Längsnut 42 begrenzen. Weiterhin ist an dem Abdeckschirm 40 auf der dem Fußschaft 11 zugewandten Seite ein Führungszapfen 43 angeformt, der in der in Fig. 7 dargestellten Montagestellung in die Bogenausnehmung 39 eingreift und somit beim Erreichen der Endstellungen bei der Bewegung zwischen der Demontagestellung und der Montagestellung an den stirnseitigen Rand der Bogenausnehmung 39 anschlägt. Dadurch ist eine Führung des Verschlussteiles 8 bei einer Bewegung zwischen der Demontagestellung und der Montagestellung unabhängig von dem Zusammenwirken der Federstege 20, 21 und der Aufnahme 12 sowie zu deren mechanischen Entlastung erzielt.

## Patentansprüche

1. Befestigungsanordnung zum Verbinden von wenigstens zwei Bauteilen (1, 2, 3) mit einem Verschlussteil (8), das eine an einem ersten Bauteil (2) zur Anlage kommende Kopfplatte (9) und einen an die Kopfplatte (9) angesetzten, sich von der Kopfplatte (9) in axialer Richtung weg erstreckenden Fußschaft (11) aufweist, an dem sich radial nach außen erstreckende, zum Hintergreifen eines zweiten Bauteiles (3) ausgebildete Rastnasen (24) angeformt sind, und mit einer an dem ersten Bauteil (2) ausgebildeten Aufnahme (12) für das Verschlussteil (8), **dadurch gekennzeichnet, dass** an dem Fußschaft (11) federnde Federstege (20, 21) ausgebildet sind, die in radialer Richtung bewegbar sind, dass jede Rastnase (24) jeweils an einem zugeordneten Federsteg (20, 21) angeordnet ist, dass jeder Federsteg (20, 21) in einem der Kopfplatte (9) benachbarten Bereich einen sich radial nach außen erstreckenden Stegflügel (23) aufweist, dass an dem Fußschaft (11) radial nach außen vorstehende Laufzapfen (17, 18) ausgebildet sind, dass die Aufnahme (12) weiterhin eine mit in radialer Richtung nach innen vorstehenden Ausbuchtabschnitten (28, 29) und mit in radialer Richtung nach außen zurücktretenden Einbuchtabschnitten (26, 27) ausgebildete, mit den Stegflügeln (23) zusammenwirkende Randwand (14) sowie eine mit sich in axialer Richtung erstreckenden Vertiefungen (32, 33, 34, 35) ausgebildete, mit den Laufzapfen (17, 18) zusammenwirkende Profilfläche (36) aufweist, wobei in einer Montagestellung des Verschlussteiles (8) die Laufzapfen (17, 18) in ersten Vertiefungen (32, 33) angeordnet sowie die Federstege (20, 21) in einer Hintergriffstellung sind, in der die Rastnasen (24) zum Hintergreifen des zweiten Bauteiles (3) angeordnet sind, und wobei in einer Demontagestellung des Verschlussteiles (8) die Laufzapfen (17, 18) in zweiten Vertiefungen (34, 35) angeordnet sowie die Federstege (20, 21) durch Anordnen der Stegflügel (23) in Einbuchtabschnitten (26, 27) der Randwand (14) in einer Freigabestellung sind, in der die Rastnasen (24) gegenüber der Hintergriffstellung in einer radial nach innen versetzten, mit dem zweiten Bauteil (2) eingriffsfreien Anordnung sind.

2. Befestigungsanordnung nach Anspruch 1, **dadurch gekennzeichnet, das** der Aufnahmeschaft (11) hohl ist und die Federstege (20, 21) jeweils durch zwei parallel zueinander ausgerichtete Längsschlitze (19) und einen sich quer zu den Längsschlitzen (19) erstreckenden Querschlitz (25) gebildet sind.

3. Befestigungsanordnung nach Anspruch 2, **dadurch gekennzeichnet, dass** die Federstege (20, 21) im Bereich eines der Kopfplatte (9) abgewandten Fußendes (22) des Fußschaftes (11) mit dem Fußschaft (11) verbunden sind.

4. Befestigungsanordnung nach einem der Ansprüche 1 bis 3, **dadurch gekennzeichnet**, **dadurch gekennzeichnet, dass** die Einbuchtabschnitte (26, 27) und die Ausbuchtabschnitte (28, 29) in axialer Richtung mit den ersten Vertiefungen (32, 33) beziehungsweise den zweiten Vertiefungen (34, 35) fluchten.

5. Befestigungsanordnung nach einem der Ansprüche 1 bis 4, **dadurch gekennzeichnet, dass** die ersten Vertiefungen (32, 33) und die zweiten Vertiefungen (33, 34) sind an ihren voneinander abgewandten Randseiten mit rechwinklig zu der Drehrichtung ausgerichteten Anschlagwänden (37, 38) ausgebildet.

6. Befestigungsanordnung nach einem der Ansprüche 1 bis 5, **dadurch gekennzeichnet, dass** eine sich im wesentlichen über 90 Grad kreisförmig um die Mitte der Aufnahme (12) erstreckende Bogenausnehmung (39) sowie ein an dem Verschlussteil (8) ausgebildeter Führungszapfen (43) vorhanden sind, wobei der Führungszapfen (39) so angeordnet ist, dass er bei einer Bewegung zwischen der Demontagestellung und der Montagestellung mit der Bogenausnehmung (39) in Eingriff ist.

## Claims

1. Fixing arrangement for connecting at least two components (1, 2, 3), comprising a locking part (8) which has a top plate (9) coming to rest on a first component (2) and a base shaft (11) which is attached to the top plate (9) and extends away from the top plate (9) in the axial direction and on which detents (24) extending radially outwards and formed for gripping behind a second component (3) are moulded, and comprising a receptacle (12) formed on the first component (2) and intended for the locking part (8), **characterized in that** spring webs (20, 21) which are moveable in the radial direction are formed on the base shaft (11), **in that** each detent (24) is arranged in each case on a coordinated spring web (20, 21), **in that** each spring web (20, 21) has, in a region adjacent to the top plate (9), a web wing (23) extending radially outwards, **in that** journals (17, 18) projecting radially outwards are formed on the base shaft (11), **in that** the receptacle (12) furthermore has an edge wall (14) which is formed with convex sections (28, 29) projecting inwards in the radial direction and with concave sections (26, 27) set back outwards in the radial direction and cooperates with the web wings (23), and a profiled surface (36) which is formed with indentations (32, 33, 34, 35) extending in the axial direction and cooperates with the journals (17, 18), in an assembled position of the locking part (8) the journals (17, 18) being arranged in first indentations (32, 33) and the spring webs (20, 21) being in a position for gripping behind, in which the detents (24) are arranged for gripping behind the second component (3), and, in a dismantled position of the locking part (8), the journals (17, 18) being arranged in second indentations (34, 35) and, by arrangement of the web wings (23) in concave sections (26, 27) of the edge wall (24), the spring webs (20, 21) being in a release position in which the detents (24) are arranged offset radially inwards relative to the position for gripping behind and do not grip the second component (2).

2. Fixing arrangement according to Claim 1, **characterized in that** the receiving shaft (11) is hollow and the spring webs (20, 21) are formed in each case by two longitudinal slots (19) parallel to one another and a cross-slot (25) extending transversely to the longitudinal slots (19).

3. Fixing arrangement according to Claim 2, **characterized in that** the spring webs (20, 21) are connecting to the base shaft (11) in the region of a base end (22) of the base shaft (11) which faces away from the top plate (9).

4. Fixing arrangement according to any of Claims 1 to 3, **characterized in that** the concave sections (26, 27) and the convex sections (28, 29) are flush with the first indentations (32, 33) or the second indentations (34, 35) in the axial direction.

5. Fixing arrangement according to any of Claims 1 to 4, **characterized in that** the first indentations (32, 33) and the second indentations (33, 34) are formed, on their edges facing away from one another, with stop walls (37, 38) at right angles to the direction of rotation.

6. Fixing arrangement according to any of Claims 1 to 5, **characterized in that** a bow recess (39) extending substantially over 90 degrees in a circular manner around the centre of the receptacle (12) and a guide peg (43) formed on the locking part (8) are present, the guide peg (39) being arranged so that it engages the bow recess (39) on movement between the dismantled position and the assembled position.

## Revendications

1. Dispositif de fixation pour l'assemblage de deux éléments de construction (1, 2, 3) au moins, comprenant un élément de verrouillage (8), qui se compose d'une plaque formant tête (9) venant en contact d'appui avec un premier élément de construction (2) et d'une tige d'ancrage en position (11) disposée attenante à la plaque formant tête (9), qui s'étend dans le sens axial depuis la plaque formant tête (9), et qui comprend, réalisés solidaires de celle-ci par moulage, des ergots de mise en prise d'encastrement (24) s'étendant vers l'extérieur dans le plan radial, agencés pour pouvoir venir cramponner par derrière un deuxième élément de construction (3), et une ouverture de passage (12) ménagée dans le premier élément de construction (2) pour l'insertion de l'élément de verrouillage (8), **caractérisé en ce que** la tige d'ancrage en position (11) est munie de segments élastiques (20, 21) susceptibles de céder par déformation élastique, qui peuvent effectuer un mouvement de déplacement dans le plan radial, **en ce que** chaque ergot de mise en prise d'encastrement (24) est respectivement disposé sur un segment élastique (20, 21) correspondant, **en ce que** chaque segment élastique (20, 21) comporte, dans une zone voisine de la plaque formant tête (9) une portion formant ailette (23) qui s'étend vers l'extérieur dans le plan radial, **en ce que** la tige d'ancrage en position (11) comporte des tourillons (17, 18) faisant saillie vers l'extérieur dans le plan radial, **en ce que** l'ouverture de passage (12) comporte en outre une paroi périphérique (14) qui présente des portions convexes (28, 29) faisant saillie vers l'intérieur dans le plan radial et des portions concaves (26, 27) formant retrait vers l'extérieur dans le plan radial, qui opère en combinaison avec les portions formant collerettes (23), ainsi qu'une surface profilée (36) comportant des dépressions (32, 33, 34, 35) s'étendant dans le plan axial, qui opère en combinaison avec les tourillons (17, 18), ce qui fait que lorsque l'élément de verrouillage (8) est en position de montage, les tourillons (17, 18) sont positionnés dans des premières dépressions (32, 33) et les segments élastiques (20, 21) sont dans une position de cramponnement par derrière, dans laquelle les ergots de mise en prise d'encastrement (24) sont disposés pour venir cramponner par derrière le deuxième élément de construction (3), et ce qui fait que lorsque l'élément de verrouillage (8) est en position de démontage, les tourillons (17, 18) sont positionnés dans des deuxièmes dépressions (34, 35) et les segments élastiques (20, 21) se trouvent, du fait de l'insertion des portions formant collerettes (23) dans les portions concaves (26, 27) de la paroi périphérique (14), dans une position de libération, dans laquelle les ergots de mise en prise d'encastrement (24) se trouvent, par rapport à leur position de cramponnement par derrière, dans une position décalée vers l'intérieur dans le plan radial, sans emprise d'engagement avec le deuxième élément de construction (2).

2. Dispositif de fixation selon la revendication 1, **caractérisé en ce que** la tige d'ancrage en position (11) est creuse et **en ce que** les segments élastiques (20, 21) comportent respectivement deux fentes longitudinales (19) orientées selon une disposition parallèles l'une par rapport à l'autre et une fente transversale (25) s'étendant transversalement par rapport aux fentes longitudinales (19).

3. Dispositif de fixation selon la revendication 2, **caractérisé en ce que** les segments élastiques (20, 21) sont raccordés à la tige d'ancrage en position (11) au niveau de l'extrémité inférieure (22) de la tige d'ancrage en position (11) disposée à l'opposé de la plaque formant tête (9).

4. Dispositif de fixation selon l'une des revendications 1 à 3, **caractérisé en ce que** les portions concaves (26, 27) et les portions convexes (28, 29) sont, dans le plan axial, disposées au même niveau que les premières dépressions (32, 33) et, ou encore, des deuxièmes dépressions (34, 35).

5. Dispositif de fixation selon l'une des revendications 1 à 4, **caractérisé en ce que** les premières dépressions (32, 33) et les deuxièmes dépressions (34, 35) comportent, au niveau de leurs bords latéraux respectivement opposés l'un à l'autre des parois de butée (37, 38) orientées perpendiculairement au sens de la rotation.

6. Dispositif de fixation selon l'une des revendications 1 à 5, **caractérisé en ce qu'**il est prévu un évidement en forme d'arc de cercle (39) s'étendant sensiblement sur un arc de 90 degrés autour du centre de l'ouverture de passage (12), ainsi qu'un téton de guidage (43) sur l'élément de verrouillage (8), le téton de guidage (43) étant en l'occurrence disposé de telle façon que lorsque l'on passe de la position de démontage à la position de montage il vient en prise d'engagement avec l'évidement en forme d'arc de cercle (39).
